# EUROPEAN PATENT SPECIFICATION

(11) **EP 3 026 768 B1**
(45) Date of publication and mention of the grant of the patent: **29.07.2020**
(21) Application number: 13889866.3
(22) Date of filing: 28.11.2013
(51) Int. Cl.: H02G 7/12, H02G 7/14

(54) **ANTI-GALLOPING PHASE-TO-GROUND SPACER**
ANTI-GALLOPINGPHASE-ZU-BODEN-ABSTANDSHALTER
ÉLÉMENT D'ESPACEMENT PHASE-TERRE ANTI-RATÉS

(30) Priority: 23.07.2013 CN 201310310300; 23.07.2013 CN 201310310227; 23.07.2013 CN 201310310480
(43) Date of publication of application: 01.06.2016
(73) Proprietor: State Grid Corporation of China, Beijing 100031 (CN); State Grid Henan Electric Power Corporation Electric Power Science Research Institute, Zhengzhou, Henan 450052 (CN)
(72) Inventor: LU, Ming, Zhengzhou Henan 450052 (CN); REN, Huan, Zhengzhou Henan 450052 (CN); WEI, Jianlin, Zhengzhou Henan 450052 (CN); LV, Zhongbin, Zhengzhou Henan 450052 (CN); ZHANG, Yupeng, Zhengzhou Henan 450052 (CN); CHEN, Rui, Zhengzhou Henan 450052 (CN); YANG, Xiaohui, Zhengzhou Henan 450052 (CN); PANG, Kai, Zhengzhou Henan 450052 (CN); ZHANG, Bo, Zhengzhou Henan 450052 (CN); SONG, Gaoli, Zhengzhou Henan 450052 (CN)
(74) Representative: Glawe, Delfs, Moll
(86) International application number: PCT/CN2013/088050
(87) International publication number: WO 2015/010403

(56) References cited:
- EP-A1- 0 384 807
- WO-A1-2012/121457
- CN-A- 101 931 192
- CN-A- 101 931 192
- CN-A- 103 414 135
- CN-U- 202 262 345
- CN-U- 202 772 532
- CN-U- 203 339 620
- CN-U- 203 434 573
- CN-U- 203 522 087
- JP-A- 2000 308 246
- JP-A- 2000 308 246
- JP-A- 2003 224 924
- US-A- 5 700 980

## Description

### Background of the Present Invention

### Field of Invention

The present invention relates to the field of anti-galloping devices, and specifically to a spacer.

### Description of Related Arts

Overhead transmission lines undertake an important task of power transmission, and their safety is an important factor for ensuring safe operation of power systems. With the continuous expansion of the grid scale and increasing deterioration of the natural environment, in terms of statistical and analytical data of accidents of overhead transmission lines in recent years, the galloping problem has become one of the most important factors that currently threaten the safety of lines. Galloping phenomena of the transmission lines and the harm thereof gradually increase, and galloping may bring various harms, including line flashover and tripping, damage to fittings and insulators, strand breakage and disconnection of wires, while serious galloping may lead to collapse of towers and cause major power grid accidents, and severely threatens the normal operation of the grid.

Galloping mainly acts on wires by wind, as a result, the distance between adjacent wires may be less than the minimum safe insulation distance at an operating voltage to cause an air insulation breakdown, leading to a power supply accident. Currently, a common practice is to dispose a phase-to-phase spacer between adjacent wires, and connect galloping two-phase wires by using the phase-phase spacer, where the wires restrict each other when galloping, to limit their respective galloping amplitude, and ensure a phase-to-phase insulation distance to prevent line mixing, and the phase-to-phase spacer can play a role of preventing line mixing.

A phase-to-phase spacer is mainly used to suppress asynchronous galloping of adjacent two-phase wires, so that the two wires gradually move synchronously, so as to reduce the galloping amplitude. Years of operating experience also indicates that the phase-to-phase spacer indeed plays a role in managing galloping.

However, a phase-to-phase spacer used currently cannot effectively suppress synchronous galloping of two adjacent wires because the phase-to-phase spacer has the following obvious defects:
First, the phase-to-phase spacer is invalid for synchronous galloping of two adjacent wires; second, when galloping occurs, the phase-to-phase spacer forces synchronization of the two adjacent wires, so that galloping energy of the wires is more concentrated and strengthened, thereby causing greater harm to transmission lines and towers; and for compact lines, due to a triangular arrangement of wires, the phase-to-phase spacer is also subject to pressure and bending force when suppressing tension generated by the galloping, and such pressure and bending force easily cause damage to the phase-to-phase spacer itself and connecting fittings of the wires.

Moreover, in recent years, there have been lots of fatigue fracture accidents of rigid phase-to-phase spacers or auxiliary fittings thereof, mainly because the rigid phase-to-phase spacers and connecting fittings thereof mainly withstand tensile load, and are designed according to the tolerable tensile load. In the case of iced galloping of the wires, line fittings and insulators are not only subject to the action of the tensile load, but also are bent and twisted under the action of wind, but bending load and torsion load are not within the range of the design of the rigid spacers, and therefore, the rigid spacers are not suitable for withstanding the bending load and the torsion load. When synchronous galloping occurs, a changing impact stress acts on the spacers, and the rigid spacers are easily damaged when subject to such alternating and impact stress. Therefore, in actual operation, the rigid spacers are subject to bending load, torsion load, alternating load, and impact load is the main reason for damage to the rigid spacers and auxiliary fittings thereof. Relevant prior art is to be found in the following documents: In the anti-galloping devices of JP 2000 308246 A, JP 2003 224924 A, and the anti-snake device of CN 202 262 345 U.

### Summary of the Present Invention

An object of the present invention is to provide an anti-galloping phase-to-ground spacer, which can effectively improve suppression effects of synchronous galloping and asynchronous galloping of transmission lines, and significantly improve force conditions of the spacer and a fitting.

The technical solutions of the present invention are as follows:
An anti-galloping phase-to-ground spacer comprises: a spacer body, an adjusting plate, and a span wire, wherein an upper end and a lower end of the spacer body are respectively connected to a connecting fitting and the adjusting plate, the spacer body between the connecting fitting and the adjusting plate is sleeved with two end-portion accessories and an insulation umbrella skirt located between the two end-portion accessories, and two ends of the span wire are separately connected to the adjusting plate and the ground.

The spacer body is a rigid spacer body, the rigid spacer body is formed by an inside epoxy resin glass drawing rod and an outside silicone rubber composite material layer; and the insulation umbrella skirt and the silicone rubber composite material layer are of a one-piece structure.

The spacer body is a flexible spacer body, and the flexible spacer body comprises a spacer core and a silicone rubber composite material layer, the silicone rubber composite material layer is located on an outer layer of the spacer core, and the spacer core is made of a high-strength force-bearing nylon material.

The spacer body is an adjustable spacer, the adjustable spacer comprises an upper spacer body, a lower spacer body, and a middle rod connected between the upper spacer body and the lower spacer body. An upper end of the upper spacer body is connected to the connecting fitting, a lower end of the lower spacer body is connected to the adjusting plate, outer circumferences of both the upper spacer body and the lower spacer body are connected to the insulation umbrella skirt, an upper side of the insulation umbrella skirt of the upper spacer body is connected to an end-portion accessory, and a lower side of the insulation umbrella skirt of the lower spacer body is also connected to an end-portion accessory; both a lower end of the upper spacer body and an upper end of the lower spacer body are connected to an end-portion accessory, and the two ends of the span wire are separately connected to the adjusting plate and the ground.

Both the upper spacer body and the lower spacer body are formed by an inside epoxy resin glass reinforced plastic drawing rod and an outside silicone rubber composite material layer; and the insulation umbrella skirt and the silicone rubber composite material layer are of a one-piece structure.

The number of the middle rod is one or more.

The middle rod is movably connected to the upper spacer body and the lower spacer body.

The middle rod is connected to the upper spacer body and the lower spacer body by a fixing ring.

The spacer body between the lower end-portion accessory and the adjusting plate is further provided with an anti-snake device.

The anti-snake device comprises a sphere with a smooth surface, the sphere is provided with a through hole, a gap is provided between the through hole and the rigid spacer body, and upper and lower sides of the sphere are provided with limiting sleeves for fixing the position of the sphere.

The spacer comprises a sub-spacer whose two ends are connected to wires, wherein the connecting fitting is connected to the sub-spacer.

The connecting fitting is a high-voltage end fitting.

The end-portion accessories are grading rings.

The present invention has the following advantages:
firstly, the phase-to-ground spacer provided in the present invention can simultaneously suppress synchronous galloping and asynchronous galloping of line wires;
secondly, the damage problem caused by the fact that the spacer withstands bending load, torsion load, alternating load, and impact load is effectively avoided;
thirdly, as the phase-to-ground spacer is arranged in a manner of being separately against over the ground, no connection is made between three phases, so that energy strengthening in the case of galloping of three-phase wires can be avoided;
fourthly, that the phase-to-phase spacer is damaged when withstanding pressure and bending force in the case of a triangular arrangement of the wires is effectively avoided;
fifthly, the spacer is installed between a line wire and the ground, so that phase-to-phase and phase-to-ground distances can be effectively controlled, phase-to-phase and phase-to-ground short circuits are avoided, security of high-voltage transmission lines is ensured, and an additional insulation distance is not increased;
sixthly, the insulation umbrella skirt is made of a composite material, which can prevent contamination and icing flashover and improve aging characteristics of an insulator;
seventhly, the lower end of the spacer body is installed with an anti-snake (rat) device, to prevent an operating accident from being caused by the fact that a snake (rat) or other small animals climb upwards along the insulator;
eighthly, both the span wire and the adjusting plate on the ground side are made of high-strength anti-theft materials, to prevent criminals from stealing and damaging line equipment.

The flexible phase-to-ground spacer provided in the present invention has the following advantages:
firstly, the flexible spacer body in the present invention is made of elastic materials, and generates elastic deformation as a whole when galloping, which can reduce impact load during galloping, and protect the fitting and the insulator;
secondly, force conditions of the spacer and the auxiliary fitting thereof in use can be significantly improved, thereby effectively avoiding damage to the spacer and the auxiliary fitting thereof caused by bending load, torsion load, and compression load;
thirdly, the spacer is lightweight, which can reduce tensile damage to the wires after the spacer is installed, and obviously cushions stress concentration of an installation point;
fourthly, because of its light weight and flexibility, the spacer can be coiled and placed, and is convenient to transport and install.

A sectional combined phase-to-ground spacer in the present invention, while effectively improving management effects of synchronous galloping and asynchronous galloping of transmission lines, has good insulating effects and an adjustable length, and has the following advantages:
firstly, the sectional combined phase-to-ground spacer has the advantages of the phase-to-ground spacer, which can simultaneously suppress synchronous galloping and asynchronous galloping of line wires;
secondly, the sectional combined phase-to-ground spacer has an adjustable length, and can perform a multi-section combination according to requirements of a customer, and a joint between each section can flexibly move under the action of natural wind or wire tension, so as to reduce damage to the spacer caused by wind and ensure a spacing distance between a phase and the ground at the same time;
thirdly, the spacer is lightweight, convenient to transport, install and maintain;
fourthly, the spacer has a novel and unique design, is flexible in installation, has a wide range of use, and has good popularization and application values and economic benefits.

### Brief Description of the Drawings

Fig. 1 is a schematic structural diagram of Example 1 and Example 2 of the present invention.
Fig. 2 is a schematic structural diagram of an anti-snake device according to Example 1, Example 2 and the Embodiment.
Fig. 3 is a schematic diagram of installation on a line according to Example 1 and Example 2.
Fig. 4 is a schematic structural diagram of the Embodiment of the present invention.
Fig. 5 is a schematic diagram of installation on a line according to the Embodiment.

### Detailed Description of the Device

The present invention is applied to a high-voltage transmission line within a range of 110 kV to 1000 kV.

### Example 1

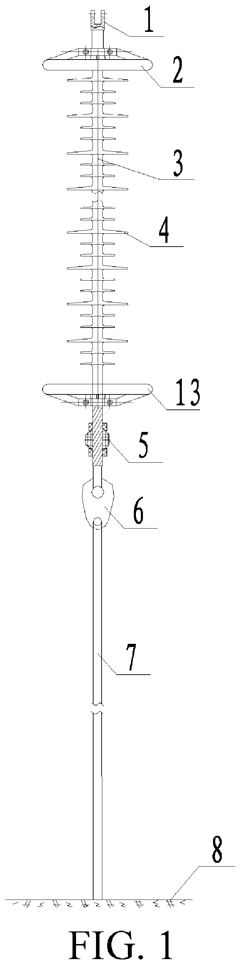

As shown in Fig. 1, the present invention mainly comprises a spacer body 3, an adjusting plate 6, and a span wire 7..The rigid spacer body 3 is formed by an inside core made of glass fiber reinforced epoxy resin and an outside silicone rubber composite material layer. The insulation umbrella skirt 4 and the silicone rubber composite material layer are of a one-piece structure.

An upper end and a lower end of the rigid spacer body 3 are respectively connected to a high-voltage end fitting 1 (connecting fitting) and the adjusting plate 6, and the high-voltage end fitting 1 is used to connect a sub-spacer 9. The rigid spacer body 3 between the high-voltage end fitting 1 and the adjusting plate 6 is sleeved with two end-portion accessories: an upper grading ring 2 and a lower grading ring 13, and the insulation umbrella skirt 4 is located between the upper grading ring 2 and the lower grading ring 13. A lower end of the adjusting plate 6 is connected to the span wire 7, and a lower end of the span wire 7 is connected to the ground 8. The rigid spacer body 3 between the lower grading ring 13 and the adjusting plate 6 is further provided with an anti-snake device 5.

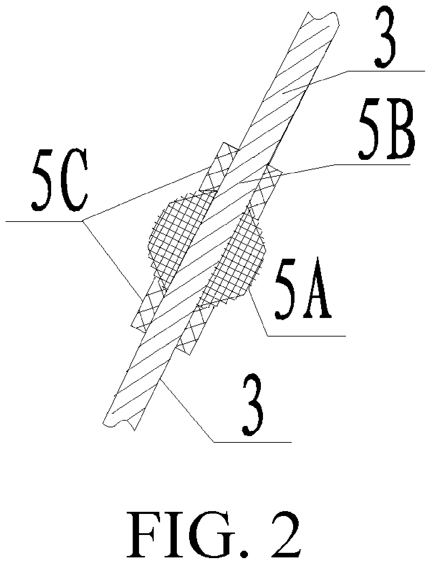

As shown in Fig. 2, the anti-snake device 5 comprises a sphere 5A with a smooth surface, the sphere 5A is provided with a through hole 5B, a gap is provided between the through hole 5B and the rigid spacer body 3, to facilitate penetration. The upper and lower sides of the sphere 5A are provided with limiting sleeves 5C for fixing the position of the sphere 5A. When a snake climbs up to the sphere 5A, the sphere 5A rotates, to make the snake out of balance and fall onto the ground, thereby preventing line discharge and tripping from being caused by the fact that the snake climbs upwards along a spacer core.

The lower end of the adjusting plate 6 is connected to the span wire 7, and the span wire 7 is fixed onto the ground 8 by using a ground anchor 11. The adjusting plate 6 can adjust the length of the span wire 7, thereby changing and adjusting a distance to the ground in the present invention. Both the span wire 7 and the adjusting plate 6 are made of special high-strength anti-theft materials.

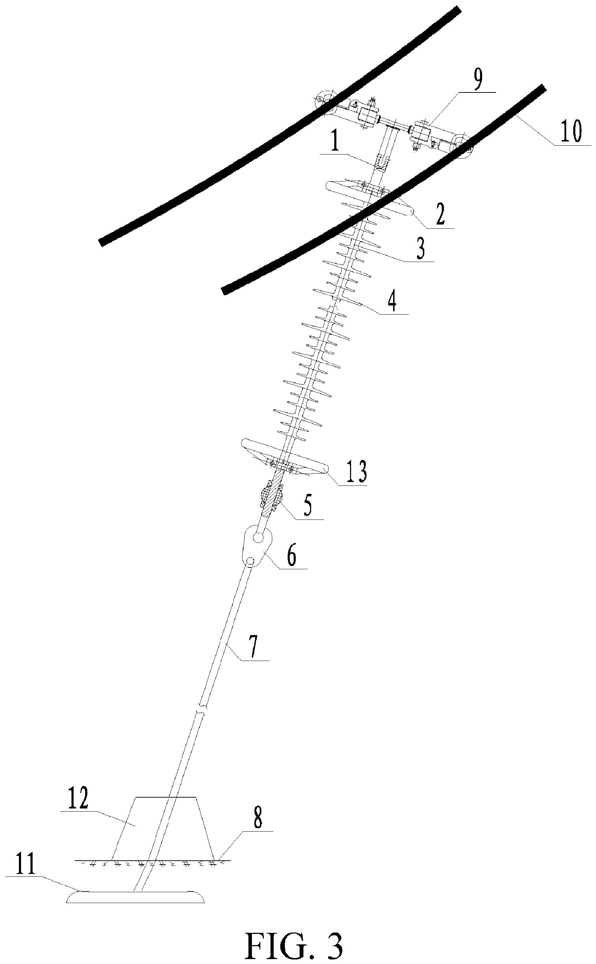

As shown in Fig. 3, the present invention describes an installation manner of the phase-to-ground spacer by using a twin-bundled single-phase wire as an example (for installation manners of a quad-bundled wire, a hexa-bundled wire, an octant-bundled wire and other bundled wires, reference may be made to this example). The high-voltage end fitting 1 is connected to the sub-spacer 9 of a wire 10, and the span wire 7 is fixed onto the ground by using the ground anchor 11. It can be seen that, in the present invention, a phase-to-ground connection manner is used, which can suppress synchronous galloping of two-phase wires and can also suppress asynchronous galloping. When the ground is farmland, a land protection pile 12 (a concrete pile) is added, and yellow warning lines are marked on the land protection pile 12, as marks, to prevent damage to the span wire 7 during farming.

### Example 2

The schematic structural diagram of Example 2 is the same as that of Example 1, and Example 2 is different from Example 1 in that, the spacer body in this example is a flexible spacer body 3, which comprises a spacer core and a silicone rubber composite material layer, the spacer core is made of a high-strength force-bearing nylon material, and the silicone rubber composite material layer is located on an outer layer of the spacer core.

An upper end and a lower end of the flexible spacer body 3 are respectively connected to the connecting fitting and the adjusting plate 6, the connecting fittings is the high-voltage end fitting 1, and the high-voltage end fitting 1 is used to connect the sub-spacer 9.

### Embodiment

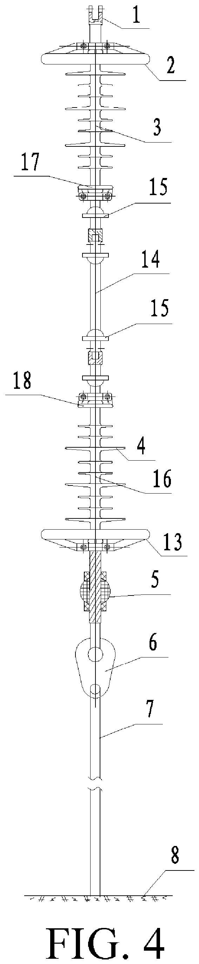

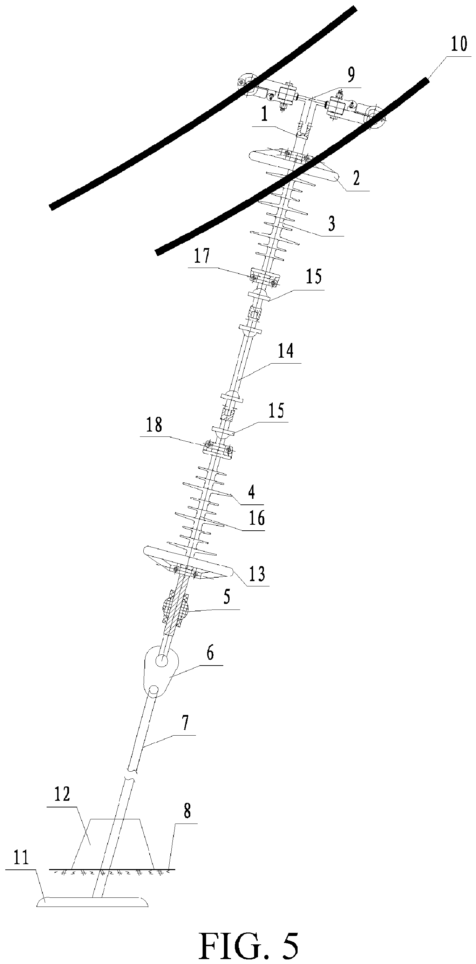

Embodiment is different from Example 1 in that, as shown in Fig. 4 and Fig. 5, the spacer body in the present invention is an adjustable spacer (that is, a sectional combined phase-to-ground spacer), and comprises upper and lower spacers: an upper spacer body 3 and a lower spacer body 16, the two spacer bodies are both formed by an inside epoxy resin glass reinforced plastic drawing rod and an outside silicone rubber composite material layer, the insulation umbrella skirt 4 is located on outer sides of the upper spacer body 3 and the lower spacer body 16, and the insulation umbrella skirt 4 and the silicone rubber composite material layer are of a one-piece structure, and are formed integrally.

A middle rod 14 is disposed between the upper spacer body 3 and the lower spacer body 16. Two ends of the middle rod 14 are separately provided with a connecting structure matching a connecting fitting on an end portion of a lower end of the upper spacer body 3 and a connecting structure matching a connecting fitting on an end portion of an upper end of the lower spacer body 16, and a moveable connection manner is used. In this embodiment, a connecting member used in the connecting structure is a fixing ring 15, and the fixing ring 15 performs a sectional connection of the two spacers. If there are a plurality of middle rods 14, the middle rods 14 are connected end to end, the middle rods 14 are also connected by using the fixing ring 15, and are moveably connected, and the middle rods 14 are made of the same material as that of the upper spacer body 3 and the lower spacer body 16. The uppermost end and the lowest end of the connected middle rods 14 are respectively connected to the end portion of the lower end of the upper spacer body 3 and the end portion of the upper end of the lower spacer body 16.

An upper end of the upper spacer body 3 is connected to the connecting fitting, the connecting fitting is the high-voltage end fitting 1, the high-voltage end fitting 1 is used to connect the sub-spacer 9, and a lower end of the lower spacer body 16 is connected to the adjusting plate 6.

The upper end of the upper spacer body 3 is further sleeved with an end-portion accessory: the upper grading ring 2, and the lower end of the upper spacer body 3 is provided with an end-portion accessory: a small upper grading ring 17; the upper end of the lower spacer body 16 is provided with an end-portion accessory: a small lower grading ring 18, and a lower side of the lower spacer body 16 is sleeved with an end-portion accessory: the lower grading ring 13. The lower end of the adjusting plate 6 is connected to the span wire 7, and the lower end of the span wire 7 is connected to the ground 8. The lower spacer body 16 between the lower grading ring 13 and the adjusting plate 6 is further provided with the anti-snake device 5.

The structure of the anti-snake device 5 is the same as that in Example 1, and the installation manner is also the same as that in Example 1.

In the present invention, a spacer formed by a rigid spacer body is referred to as a rigid phase-to-ground spacer; a spacer formed by a flexible spacer body is referred to as a flexible phase-to-ground spacer; and a spacer formed by an adjustable spacer body is referred to as a sectional combined phase-to-ground spacer.

## Claims

1. An anti-galloping phase-to-ground spacer, comprising: a spacer body (3), an adjusting plate (6), and a span wire (7); an upper end and a lower end of the spacer body are respectively connected to a connecting fitting (1) and the adjusting plate (6), the spacer body (3) between the connecting fitting (1) and the adjusting plate (6) is sleeved with grading rings (2, 13) and an insulation umbrella skirt (4) located between the two grading rings (2, 13) wherein the two ends of the span wire (7) are separately connected to the adjusting plate (6) and the ground; wherein the spacer body between the lower grading ring (13) and the adjusting plate (6) is further provided with an anti-snake device (5); wherein the spacer body (3) is an adjustable spacer, the adjustable spacer comprises an upper spacer body, a lower spacer body, and a middle rod (14) connected between the upper spacer body and the lower spacer body, an upper end of the upper spacer body is connected to the connecting fitting (1), a lower end of the lower spacer body is connected to the adjusting plate (6), outer circumferences of both the upper spacer body and the lower spacer body are connected to the insulation umbrella skirt (4), an upper side of the insulation umbrella skirt (4) of the upper spacer body is connected to the upper grading ring (2), and a lower side of the insulation umbrella skirt (4) of the lower spacer body is also connected to the lower grading ring (13); both a lower end of the upper spacer body and an upper end of the lower spacer body are connected to an end-portion accessory; wherein the middle rod (14) is moveably connected to the upper spacer body and the lower spacer body.

2. The anti-galloping phase-to-ground spacer as in claim 1, wherein the spacer body (3) is a rigid spacer body, the rigid spacer body (3) is formed by an inside epoxy resin glass drawing rod and an outside silicone rubber composite material layer, and the insulation umbrella skirt (4) and the silicone rubber composite material layer are of a one-piece structure.

3. The anti-galloping phase-to-ground spacer as in claim 1, wherein the spacer body (3) is a flexible spacer body, the flexible spacer body (3) comprises a spacer core and a silicone rubber composite material layer, the silicone rubber composite material layer is located on an outer layer of the spacer core (3), and the spacer core is made of a high-strength force-bearing nylon material.

4. The anti-galloping phase-to-ground spacer as in claim 1, wherein both the upper spacer body and the lower spacer body are formed by an inside epoxy resin glass reinforced plastic drawing rod and an outside silicone rubber composite material layer, and the insulation umbrella skirt (4) and the silicone rubber composite material layer are of a one-piece structure.

5. The anti-galloping phase-to-ground spacer as in claim 1 or 4, wherein the number of the middle rod (14) is one or more.

6. The anti-galloping phase-to-ground spacer as in claim 1, wherein the middle rod (14) is connected to the upper spacer body and the lower spacer body by using a fixing ring.

7. The anti-galloping phase-to-ground spacer as in claims 1 to 5, wherein the anti-snake device (5) comprises a sphere (5A) with a smooth surface, the sphere (5A) is provided with a through hole, a gap is provided between the through hole and the spacer body (3), and upper and lower sides of the sphere (5A) are provided with limiting sleeves (5C) for fixing the position of the sphere (5A).

8. The anti-galloping phase-to-ground spacer as in any one of claims 1 to 4, comprising: a sub-spacer (9) whose two ends are connected to wires, wherein the connecting fitting (1) is connected to the sub-spacer (9).

9. The anti-galloping phase-to-ground spacer as in any one of claims 1 to 4, wherein the connecting fitting (1) is a high-voltage end fitting.

10. The anti-galloping phase-to-ground spacer as in any one of claims 1 to 4, wherein the end-portion accessories are grading rings (17, 18).

## Patentansprüche

1. Gegen Leiterseilschwingen wirkender Phase-zu-Erde-Abstandshalter, umfassend:
einen Abstandshalterkörper (3), eine Justierplatte (6) und einen Spanndraht (7);
wobei ein oberes und ein unteres Ende des Abstandshalters mit einem Verbindungsbeschlag (1) beziehungsweise der Justierplatte (6) verbunden ist, wobei der Abstandshalterkörper (3) zwischen dem Verbindungsbeschlag (1) und der Justierplatte (6) mit Abschirmringen (2, 13) ummantelt ist und eine Isolierschirmschürze (4) sich zwischen den beiden Abschirmringen (2, 13) befindet, wobei die beiden Enden des Spanndrahts (7) separat mit der Justierplatte (6) und der Erde verbunden sind;
wobei der Abstandshalterkörper zwischen dem unteren Abschirmring (13) und der Justierplatte (6) des Weiteren mit einer Antischlangenvorrichtung (5) ausgestattet ist;
wobei der Abstandshalterkörper (3) ein justierbarer Abstandshalter ist, der justierbare Abstandshalter einen oberen Abstandshalterkörper, einen unteren Abstandshalterkörper und einen Mittelstab (14) umfasst, der zwischen dem oberen Abstandshalterkörper und dem unteren Abstandshalterkörper verbunden ist, wobei ein oberes Ende des oberen Abstandshalterkörpers mit dem Verbindungsbeschlag (1) verbunden ist, ein unteres Ende des unteren Abstandshalterkörpers mit der Justierplatte (6) verbunden ist, die Außenumfänge von sowohl dem oberen Abstandshalterkörper als auch dem unteren Abstandshalterkörper mit der Isolierschirmschürze (4) verbunden sind, wobei eine Oberseite der Isolierschirmschürze (4) des oberen Abstandshalterkörpers mit dem oberen Abschirmring (2) verbunden ist, und eine Unterseite der Isolierschirmschürze (4) des unteren Abstandshalterkörpers ebenfalls mit dem unteren Abschirmring (13) verbunden ist;
sowohl ein unteres Ende des oberen Abstandshalterkörpers als auch ein oberes Ende des unteren Abstandshalterkörpers mit einem Endabschnittzurüstteil verbunden sind;
wobei der Mittelstab (14) beweglich mit dem oberen Abstandshalterkörper und dem unteren Abstandshalterkörper verbunden ist.

2. Gegen Leiterseilschwingen wirkender Phase-zu-Erde-Abstandshalter nach Anspruch 1, wobei der Abstandshalterkörper (3) ein starrer Abstandshalterkörper ist, wobei der starre Abstandshalterkörper (3) durch einen Ziehstab aus Epoxyharz-Glas an der Innenseite und eine Verbundmaterialschicht aus Silikongummi an der Außenseite gebildet ist, und wobei die Isolierschirmschürze (4) und die Verbundmaterialschicht aus Silikongummi eine einteilige Struktur sind.

3. Gegen Leiterseilschwingen wirkender Phase-zu-Erde-Abstandshalter nach Anspruch 1, wobei der Abstandshalterkörper (3) ein flexibler Abstandshalterkörper ist, der flexible Abstandshalterkörper (3) einen Abstandshalterkern und eine Verbundmaterialschicht aus Silikongummi umfasst, wobei sich die Verbundmaterialschicht aus Silikongummi auf einer Außenschicht des Abstandshalterkerns (3) befindet und der Abstandshalterkern aus krafttragendem hochfestem Nylonmaterial gefertigt ist.

4. Gegen Leiterseilschwingen wirkender Phase-zu-Erde-Abstandshalter nach Anspruch 1, wobei sowohl der obere Abstandshalterkörper als auch der untere Abstandshalterkörper aus einem Ziehstab, der an der Innenseite Epoxyharz-glasverstärkten Kunststoff aufweist, und einer Verbundmaterialschicht aus Silikongummi an der Außenseite gebildet sind, und wobei die Isolierschirmschürze (4) und die Verbundmaterialschicht aus Silikongummi eine einteilige Struktur sind.

5. Gegen Leiterseilschwingen wirkender Phase-zu-Erde-Abstandshalter nach einem der Ansprüche 1 bis 4, wobei die Anzahl der Mittelstäbe (14) eins oder mehr beträgt.

6. Gegen Leiterseilschwingen wirkender Phase-zu-Erde-Abstandshalter nach Anspruch 1, wobei der Mittelstab (14) unter Verwendung eines Fixierrings mit dem oberen Abstandshalterkörper und dem unteren Abstandshalterkörper verbunden ist.

7. Gegen Leiterseilschwingen wirkender Phase-zu-Erde-Abstandshalter nach einem der Ansprüche 1 bis 5, wobei die Antischlangenvorrichtung (5) eine Kugel (5A) mit einer glatten Oberfläche umfasst, wobei die Kugel (5A) mit einem durchgehenden Loch ausgestattet ist, eine Lücke zwischen dem durchgehenden Loch und dem Abstandshalterkörper (3) bereitgestellt wird, und obere und untere Seiten der Kugel (5A) mit Begrenzungsummantelungen (5C) ausgestattet sind, um die Position der Kugel (5A) zu fixieren.

8. Gegen Leiterseilschwingen wirkender Phase-zu-Erde-Abstandshalter nach einem der Ansprüche 1 bis 4, umfassend: einen Teilabstandshalter (9), dessen beide Enden mit Drähten verbunden sind, wobei der Verbindungsbeschlag (1) mit dem Teilabstandshalter (9) verbunden ist.

9. Gegen Leiterseilschwingen wirkender Phase-zu-Erde-Abstandshalter nach einem der Ansprüche 1 bis 4, wobei der Verbindungsbeschlag (1) ein Endbeschlag für Hochspannung ist.

10. Gegen Leiterseilschwingen wirkender Phase-zu-Erde-Abstandshalter nach einem der Ansprüche 1 bis 4, wobei die Endabschnittzurüstteile Abschirmringe (17, 18) sind.

## Revendications

1. Entretoise phase-terre anti-galop, comprenant : un corps d'entretoise (3), une plaque de réglage (6), et un fil tendeur (7) ; une extrémité supérieure et une extrémité inférieure du corps d'entretoise étant respectivement reliées à une pièce de raccordement (1) et la plaque de réglage (6), le corps d'entretoise (3) entre la pièce de raccordement (1) et la plaque de réglage (6) étant entouré par des anneaux de garde (2, 13) et une collerette d'isolation en parapluie (4) située entre les deux anneaux de garde (2, 13), les deux extrémités du fil tendeur (7) étant séparément reliées à la plaque de réglage (6) et la terre ; le corps d'entretoise entre l'anneau de garde inférieur (13) et la plaque de réglage (6) étant en outre pourvu d'un dispositif anti-oscillation (5) ; le corps d'entretoise (3) étant une entretoise réglable, l'entretoise réglable comprenant un corps supérieur d'entretoise, un corps inférieur d'entretoise, et une tige centrale (14) reliée entre le corps supérieur d'entretoise et le corps inférieur d'entretoise, une extrémité supérieure du corps supérieur d'entretoise étant reliée à la pièce de raccordement (1), une extrémité inférieure du corps inférieur d'entretoise étant reliée à la plaque de réglage (6), des circonférences externes à la fois du corps supérieur d'entretoise et du corps inférieur d'entretoise étant reliées à la collerette d'isolation en parapluie (4), un côté supérieur de la collerette d'isolation en parapluie (4) du corps supérieur d'entretoise étant relié à l'anneau de garde supérieur (2), et un côté inférieur de la collerette d'isolation en parapluie (4) du corps inférieur d'entretoise étant également relié à l'anneau de garde inférieur (13) ; une extrémité inférieure du corps supérieur d'entretoise et une extrémité supérieure du corps inférieur d'entretoise étant toutes deux reliées à un accessoire d'extrémité ; la tige centrale (14) étant reliée de façon mobile au corps supérieur d'entretoise et au corps inférieur d'entretoise.

2. Entretoise phase-terre anti-galop selon la revendication 1, dans laquelle le corps d'entretoise (3) est un corps d'entretoise rigide, le corps d'entretoise rigide (3) est formé par une tige d'étirage intérieure en résine époxy et verre et une couche extérieure de matériau composite à base de caoutchouc de silicone, et la collerette d'isolation en parapluie (4) et la couche de matériau composite à base de caoutchouc de silicone font partie d'une structure monobloc.

3. Entretoise phase-terre anti-galop selon la revendication 1, dans laquelle le corps d'entretoise (3) est un corps d'entretoise souple, le corps d'entretoise souple (3) comprend un cœur d'entretoise et une couche de matériau composite à base de caoutchouc de silicone, la couche de matériau composite à base de caoutchouc de silicone est située sur une couche externe du cœur d'entretoise (3), et le cœur d'entretoise est constitué d'un matériau en nylon à haute résistance résistant aux forces.

4. Entretoise phase-terre anti-galop selon la revendication 1, dans laquelle le corps supérieur d'entretoise et le corps inférieur d'entretoise sont tous deux formés par une tige d'étirage intérieure en plastique renforcé de résine époxy et de verre et une couche extérieure de matériau composite à base de caoutchouc de silicone, et la collerette d'isolation en parapluie (4) et la couche de matériau composite à base de caoutchouc de silicone font partie d'une structure monobloc.

5. Entretoise phase-terre anti-galop selon la revendication 1 ou 4, dans laquelle le nombre de la tige centrale (14) est d'au moins un.

6. Entretoise phase-terre anti-galop selon la revendication 1, dans laquelle la tige centrale (14) est reliée au corps supérieur d'entretoise et au corps inférieur d'entretoise au moyen d'une bague de fixation.

7. Entretoise phase-terre anti-galop selon les revendications 1 à 5, dans laquelle le dispositif anti-oscillation (5) comprend une sphère (5A) avec une surface lisse, la sphère (5A) est pourvue d'un trou débouchant, un espace est ménagé entre le trou débouchant et le corps d'entretoise (3), et des côtés supérieur et inférieur de la sphère (5A) sont pourvus de manchons de limitation (5C) pour fixer la position de la sphère (5A).

8. Entretoise phase-terre anti-galop selon l'une quelconque des revendications 1 à 4, comprenant : une sous-entretoise (9) dont les deux extrémités sont reliées à des fils, la pièce de raccordement (1) étant reliée à la sous-entretoise (9).

9. Entretoise phase-terre anti-galop selon l'une quelconque des revendications 1 à 4, dans laquelle la pièce de raccordement (1) est une pièce d'extrémité haute tension.

10. Entretoise phase-terre anti-galop selon l'une quelconque des revendications 1 à 4, dans laquelle les accessoires d'extrémité sont des anneaux de garde (17, 18).
